# EUROPEAN PATENT APPLICATION

(11) **EP 2 712 184 A1**
(43) Date of publication of application: **26.03.2014**
(21) Application number: 12785830.6
(22) Date of filing: 18.05.2012
(51) Int. Cl.: H04N 7/173, H04H 20/59

(54) **RECEIVER**

(30) Priority: 19.05.2011 JP 2011112251
(71) Applicant: Japan Broadcasting Corporation, Shibuya-ku, Tokyo 150-8001 (JP)
(72) Inventor: MATSUMURA, Kinji, Tokyo 157-8510 (JP); MITSUYA, Shigeaki, Tokyo 157-8510 (JP); BABA, Akitsugu, Tokyo 157-8510 (JP); FUJISAWA, Hiroshi, Tokyo 157-8510 (JP); TAKECHI, Masaru, Tokyo 157-8510 (JP); KANATSUGU, Yasuaki, Tokyo 157-8510 (JP); HAMADA, Hiroyuki, Tokyo 157-8510 (JP)
(74) Representative: Fiesser, Gerold Michael
(86) International application number: PCT/JP2012/062762
(87) International publication number: WO 2012/157738

(57) **Abstract**

Provided is a receiver that can appropriately present applications that can be executed according to the viewing state of the receiver. The receiver (4) is provided with: a menu generation unit (191) that identifies, in response to receipt of a prescribed operation, executable applications on the basis of a viewing state detected by a viewing state detection unit (18) and executable information included in an AIT, and generates a menu screen including information about the identified applications; a display control unit (21) that conducts display control by compositing the menu screen and program content; and an application execution control unit (192) that acquires, in response to an application selecting operation received by an operation receiving unit (17) after the menu screen has been composited with the program content by the display control unit (21), the selected application from a service server (3) on the basis of location information in the AIT that corresponds to the selected application, and executes the selected application.

## Description

### TECHNICAL FIELD

The present invention relates to a receiver that executes an application operable in conjunction with broadcasting.

### BACKGROUND ART

With recent digitization of broadcasting and advanced broadbandization of communication, research and development are being carried out aiming at implementation of broadcast/communication integrated services.

In such broadcast/communication integrated services, consideration has been given to the idea of distributing content through different transmission paths, namely broadcasting and communication, and concurrently displaying a plurality of delivered content on a display screen of a receiver such as a digital television, a personal computer or a portable terminal.

For example, Patent Document 1 proposes that an application program (hereinafter referred to as an application) such as a widget (or a gadget) or a browser be used to display content such as character information, sound and moving images delivered through communication, so as to be superimposed on a display screen of a broadcast program forming content delivered through broadcasting.

Patent Document 1: Japanese Unexamined Patent Application, Publication No. 2010-4498

### DISCLOSURE OF THE INVENTION

### Problems to be Solved by the Invention

For the purpose of reinforcing the integration of communication and broadcasting, it is desired that information of an application, which is operative in conjunction with program content, be delivered from both a broadcasting station and a server.

On the other hand, it is desired that an application to be integrated into broadcasting be stored in a receiver in advance by a user, or that an application be stored in a receiver in advance by the receiver manufacturer for convenience and improvement of service.

Therefore, applications that are executable by a receiver are expected to cover a wide range. Furthermore, a viewing state in a receiver may frequently vary due to reasons such as a user frequently changing channels. Under such circumstances, the receiver is desired to appropriately present an executable application to a user of the receiver in accordance with a viewing state.

An object of the present invention is to provide a receiver that can appropriately present an executable application in accordance with a viewing state.

### Means for Solving the Problems

The receiver of the present invention is configured as a receiver communicably connected to a server and capable of receiving broadcast waves from a broadcasting station. The receiver includes: an operation receiving unit for receiving an operation from a user; a viewing state detection unit for detecting a viewing state of the receiver; an application management information storage unit for storing application management information corresponding to a single or each of a plurality of applications capable of acquiring content, the application management information including identification information of an application, executable information indicating an executable viewing state of the application, and location information indicating location of the application; a receiving unit for receiving a program content signal through broadcasting, the signal configured by multiplexing the program content and the application management information; an application management information acquisition unit for extracting the application management information multiplexed with the program content signal so as to be stored in the application management information storage unit; a menu generation unit for identifying an executable application when the operation receiving unit receives a predetermined operation, based on the viewing state detected by the viewing state detection unit, and based on the executable information included in the application management information, and for generating a menu screen including information of the identified application; a composite display control unit for display control such that at least one of the content acquired by the application and the menu screen is combined with the program content; and an application execution control unit for acquiring a selected application from the server and executing the selected application when the operation receiving unit receives an operation of selecting the application after the composite display control unit combines the menu screen with the program content, based on the location information of the application management information corresponding to the selected application.

According to the configuration, the receiver identifies an executable application based on the viewing state in the receiver and the executable information included in the application management information, and generates a menu screen including the information of the identified application. The receiver receives selection of an application through the menu screen. Therefore, the receiver can appropriately present an executable application in accordance with a viewing state.

The receiver may be configured such that: the application management information includes, in the executable information, identification information of a broadcasting station whose channel is selected in the receiver; the viewing state detection unit detects, as the viewing state, the identification information of the broadcasting station whose channel is selected in the receiver; and when the operation receiving unit receives a predetermined operation, the menu generation unit identifies, as an executable application, an application corresponding to the application management information including, in the executable information, the identification information of the broadcasting station whose channel is selected and detected by the viewing state detection unit, and generates a menu screen including information of the identified application.

According to the configuration, the receiver can present an application corresponding to the currently viewed broadcasting station as an executable application.

The receiver may be configured such that: the viewing state detection unit detects, as the viewing state, identification information of program content currently viewed in the receiver; the application management information storage unit stores the application management information multiplexed with the program content signal in association with the identification information of the program content currently viewed in the receiver; and when the operation receiving unit receives a predetermined operation, in the application management information storage unit, the menu generation unit identifies, as an executable application, an application corresponding to the application management information associated with identification information of the program currently viewed and detected by the viewing state detection unit, and generates a menu screen including information of the identified application.

According to the configuration, the receiver can present an application corresponding to the currently viewed program content as an executable application.

The receiver may be configured such that: the viewing state detection unit detects, as the viewing state, identification information of an application currently executed by the application execution control unit; and when the operation receiving unit receives a predetermined operation, the menu generation unit identifies, as an executable application, an application corresponding to the application management information including identification information of an application that does not match identification information of the application detected by the viewing state detection unit, and generates a menu screen including information of the identified application.

According to the configuration, the receiver can prevent an already running application from being redundantly executed.

The receiver may be configured such that: the application management information includes, in the executable information, a predetermined flag indicating whether an application should be executed when an emergency alert is issued; the viewing state detection unit detects that the viewing state is an emergency state, in a case in which the receiver receives the emergency alert through broadcasting or communication; and when the operation receiving unit receives a predetermined operation, in a case in which the viewing state detected by the viewing state detection unit is the emergency state, the menu generation unit identifies an executable application based on the predetermined flag included in the executable information, and generates a menu screen including information of the identified application.

According to the configuration, in an emergency state where an emergency alert is issued, the receiver narrows the executable applications down to applications that can be executed even in the emergency state. Therefore, the receiver can suppress execution of applications unnecessary in an emergency state, thereby allow information necessary in the emergency state to be easily browsed by the user of the receiver.

### Effects of the Invention

According to the present invention, it is possible to appropriately present an executable application in accordance with a viewing state.

### BRIEF DESCRIPTION OF THE DRAWINGS

FIG. 1 is an overall configuration diagram showing a broadcast/communication integrated system;
FIG. 2 is a diagram showing a transmission protocol stack of broadcast signals for digital broadcasting;
FIG. 3 is a block diagram showing a functional configuration of a receiver;
FIG. 4 is a diagram showing an example of an AIT described in an XML format;
FIG. 5 is a diagram showing a state of individual management information included in an AIT stored in an AIT storage unit;
FIG. 6 is a diagram showing an example of an image of program content displayed on a display;
FIG. 7 is a diagram showing an example of a composite display, in which a menu screen is combined with an image of program content;
FIG. 8 is a diagram showing an example of a composite display, in which an image of an application is combined with the image of the program content;
FIG. 9 is a diagram showing an example of a composite display, in which the menu screen, the image of the application and the image of the program content are combined with one another;
FIG. 10 is a diagram showing an example of composite display, in which an image of an emergency alert is combined with the image of the program content;
FIG. 11 is a diagram showing an example of composite display, in which the image of the emergency alert, the menu screen and the image of the program content are combined with one another; and
FIG. 12 is a flowchart showing flow of processing from receiving a predetermined operation until executing an application via the menu screen.

### EXPLANATION OF REFERENCE NUMERALS

1 broadcasting station
2 broadcasting antenna
3 service server
4 receiver
11 broadcast wave receiving unit
12 first separation unit
13 broadcast AIT acquisition unit
14 communication unit
15 second separation unit
16 communication AIT acquisition unit
17 operation receiving unit
18 viewing state detection unit
19 application control unit
20 audio control unit
21 display control unit
22 speaker
23 display
24 memory
25 AIT storage unit
26 application storage unit
100 broadcast/communication integrated system
191 menu generation unit
192 application execution control unit

### PREFERRED MODE FOR CARRYING OUT THE INVENTION

An embodiment of the present invention is hereinafter described with reference to the drawings.

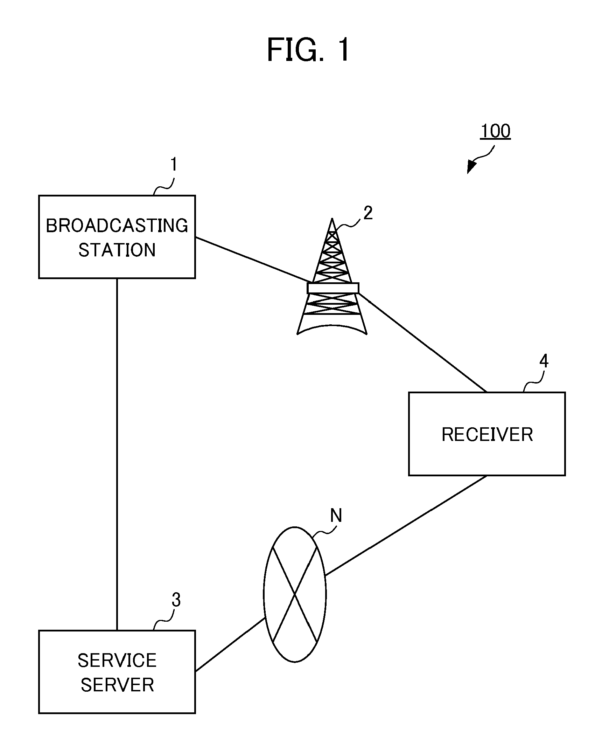

FIG. 1 is an overall configuration diagram of a broadcast/communication integrated system 100 according to the embodiment of the present invention. The broadcast/communication integrated system 100 is configured to include a broadcasting station 1, a broadcasting antenna 2, a service server 3 (distribution server), and a receiver 4. The broadcasting station 1 provides broadcast services through an Integrated Services Digital Broadcasting (ISDB) scheme, and the service server 3 provides communication services through a communication network N configured by the Internet, or the like; and the broadcast/communication integrated system 100 integrates both services into broadcast/communication integrated services in the receiver 4 to be provided to a user of the receiver 4.

The broadcasting station 1 includes typical broadcasting facilities (not illustrated) for digital broadcasting; the facilities are configured to include a program scheduling facility, a program delivering facility, and a transmitting facility. FIG. 1 shows only one broadcasting station 1; however, it is assumed herein that a plurality of communication common carriers have their own broadcasting station.

The broadcasting station 1 produces content, event information (Event Information Table: EIT), application management information (Application Information Table: AIT) and the like, by the broadcasting facilities. The broadcasting station 1 multiplexes the content, the event information, the AIT and the like, into broadcast signals, by the broadcasting facilities. The broadcasting station 1 modulates the broadcast signals into broadcast waves, by the broadcasting facilities, and broadcasts the broadcast waves through the broadcasting antenna 2.

The content included in the broadcast waves to be broadcast from the broadcasting station 1 include: program content configured to include audio and video content to be broadcast in accordance with a broadcast schedule, emergency content such as Earthquake Early Warning that occurs asynchronously to the program content, and the like.

The event information includes meta-information regarding content, such as program content names, airdate and airtime of the program content, and descriptions of the program content. The event information is hereinafter referred to as an EIT.

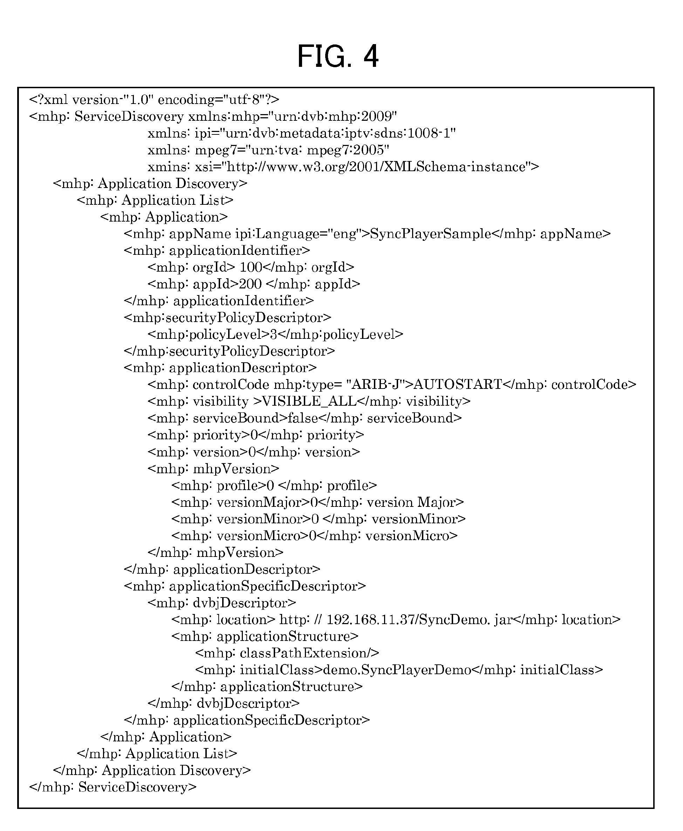

An AIT constitutes management information for managing a single or plurality of application programs (hereinafter described as an application), which are capable of providing content in conjunction with the program content to the receiver 4. An AIT includes a single or plurality of items of individual management information respectively corresponding to a single or plurality of applications, for the purpose of respectively managing the single or plurality of applications. The individual management information includes: an application ID for identifying an application; life cycle control information for controlling the life cycle of an application; and location information for indicating location of an application (see FIG. 4).

The content provided by an application includes: content linked with the program content; and content not linked with the program content. The content provided by an application is hereinafter referred to as application content.

The broadcast signals are identical to broadcast signals of conventional digital broadcasting, and are defined according to the standard of ARIB (registered trademark; Association of Radio Industries and Businesses).

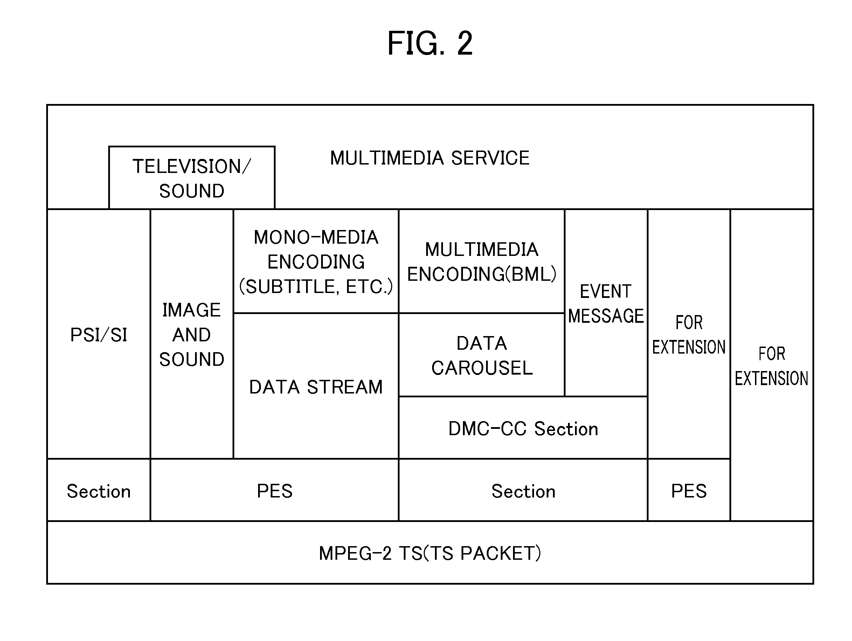

FIG. 2 is a diagram showing a transmission protocol stack of broadcast signals for digital broadcasting. As shown in FIG. 2, various data such as audio data and video data provided through digital broadcasting is stored in a TS packet (transport stream packet) defined according to the international standard of MPEG-2 Systems, and is transmitted by time-division multiplexing.

As shown in FIG. 2, PSI/SI (Program Specific Information/Service Information) is defined with regard to a Section in the TS packet. The PSI/SI includes information indicating a type of data stored in the TS packet or information indicating a type of content. The EIT is included in the SI.

Data transmission through a TS packet is classified into: a data transmission scheme using a Section; and a data transmission scheme (data stream transmission scheme) using a PES (Packetized Elementary Stream) packet.

The data transmission scheme using a Section includes a data carousel transmission scheme, and an event message transmission scheme.

The data carousel transmission scheme is a transmission scheme for repeatedly transmitting a single or plurality of items of data in a constant cycle, in which identification information for identifying individual data is assigned to individual data (module) transmitted through the transmission scheme. The data carousel transmission scheme is used for the purpose of causing the receiver 4 to acquire individual data at arbitrary timing.

The event message transmission scheme is a scheme for transmitting a trigger signal from the broadcasting station 1 to the receiver 4. The event message transmission scheme is used in a case of transmitting a message with a small volume of data from the broadcasting station 1 to the receiver 4.

The data stream transmission scheme is a transmission scheme for transmitting data as a stream, in which the transmitted data is contained in a PES packet. The data stream transmission scheme is used for transmitting real-time data such as image data, sound data and closed caption data, as well as data that requires synchronization with another stream.

In this regard, an AIT can be transmitted with various methods using a TS packet.

Namely, an AIT can be transmitted by providing a description to an EIT included in SI of a TS packet.

An AIT can be transmitted through the data carousel transmission scheme using a Section. In a case in which an AIT is transmitted through the data carousel transmission scheme, identification information is assigned to a module such that the receiver 4 can recognize the data as the AIT.

An AIT can be transmitted by multiplexing an image and sound of content into a PES.

An AIT can be stored in a TS packet through a description in binary representation or text representation in XML (Extensible Markup Language).

In the present embodiment, it is assumed that at least one of the abovementioned transmission schemes is defined in advance as a transmission scheme for an AIT.

The multimedia coding (Broadcast Markup Language: BML) is a standard defined in consideration of consistency with international standards based on xHTML defined by W3C (registered trademark, World Wide Web Consortium) by using ECMA Script based on Java Script (registered trademark) as a procedure-oriented language.

The service server 3 includes (although not illustrated): a content distribution server that distributes program content as well as content to be distributed to an application (application content); and an application distribution server that distributes various applications operating in the receiver 4.

The service server 3 is communicably connected to the facilities of the broadcasting station 1, and receives program content and metadata of the program content from the broadcasting station 1.

When the service server 3 receives an acquisition request for program content from the receiver 4, the service server 3 transmits the program content to the receiver 4.

The service server 3 stores applications, and when the service server 3 receives an acquisition request for an application from the receiver 4, the service server 3 transmits the application to the receiver 4. Furthermore, in a case in which an application is running in the receiver 4, the service server 3 transmits data of application content such as video data and audio data to the receiver 4.

The service server 3 stores an AIT and transmits the AIT multiplexed with the program content to the receiver 4. When the service server 3 receives an acquisition request for an AIT from the receiver 4, the service server 3 transmits the AIT to the receiver 4.

By executing predetermined processing on program content received through the broadcasting from the broadcasting station 1, the receiver 4 outputs video data and audio data of the program content in synchronization. By executing predetermined processing on program content received through the communication network N from the service server 3 (for example, program content provided by VOD services) in conjunction with the broadcasting from the broadcasting station 1, the receiver 4 outputs video data and audio data of the program content in synchronization.

The receiver 4 acquires an application based on an AIT and executes the acquired application. Subsequently, by using the running application, the receiver 4 acquires video data and audio data of the application content from the service server 3, and outputs the data integrated into the video data and audio data of the program content. Functions of the receiver 4 are described in detail below.

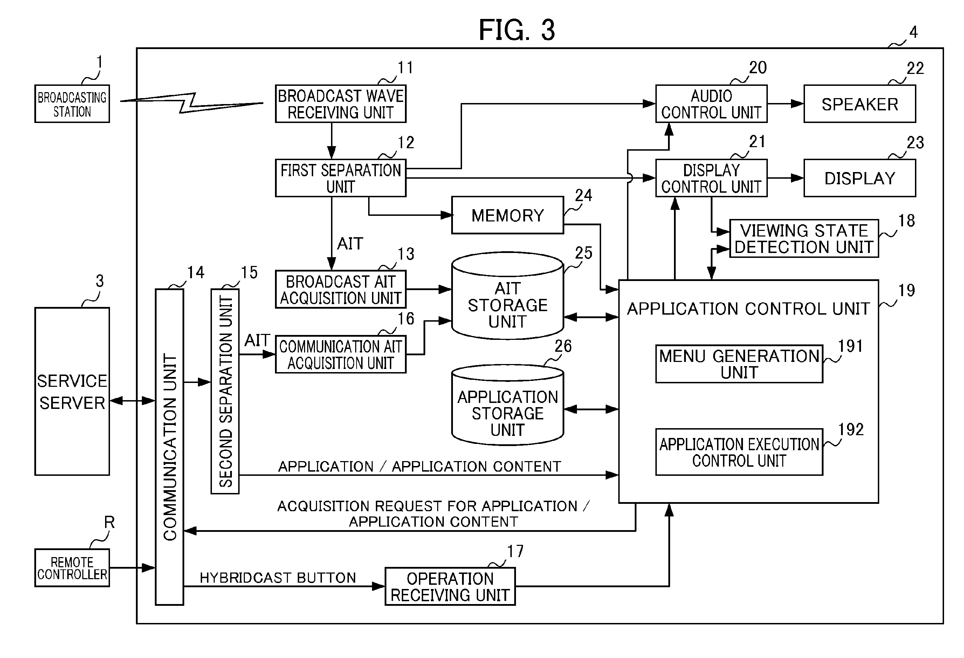

FIG. 3 is a block diagram showing a functional configuration of the receiver 4 according to the present embodiment.

The receiver 4 includes a broadcast wave receiving unit 11 as receiving means, a first separation unit 12, a broadcast-AIT acquisition unit 13 as application management information acquiring means, a communication unit 14, a second separation unit 15, a communication AIT acquisition unit 16, an operation receiving unit 17 as operation receiving means, a viewing state detection unit 18 as viewing state detecting means, an application control unit 19, an audio control unit 20, a display control unit 21 as composite displaying controlling means, a speaker 22, a display 23, memory 24, an AIT storage unit 25 as application management information storing means, and an application storage unit 26 as the application storing means.

The broadcast wave receiving unit 11 receives broadcast waves broadcast through the broadcasting antenna 2 from the broadcasting station 1.

The first separation unit 12 demodulates the broadcast waves received by the broadcast wave receiving unit 11, and extracts broadcast signals, i.e. TS packets, from the broadcast waves. By referring to PSI/SI of the TS packet, the first separation unit 12 determines the type of data included in the TS packet, and extracts various data such as images, sound, an EIT, etc. The first separation unit 12 extracts an AIT by referring to a Section and a PES, in accordance with a predefined AIT transmission scheme.

Subsequently, in a case in which the data included in the PES of the TS packet is audio data, the first separation unit 12 outputs the audio data to the audio control unit 20. In a case in which the data included in the PES of the TS packet is video data, the first separation unit 12 outputs the video data to the display control unit 21.

The first separation unit 12 stores the extracted EIT, data indicating an emergency alert, and various other data, in the memory 24. The first separation unit 12 identifies identification information of the currently viewed program content from the extracted EIT. In a case in which an AIT is extracted, the first separation unit 12 associates the extracted AIT with the identification information of the currently viewed program content, and outputs them to the broadcast AIT acquisition unit 13.

The broadcast AIT acquisition unit 13 acquires the AIT and the identification information of the currently viewed program content, which are output from the first separation unit 12. The broadcast AIT acquisition unit 13 associates the AIT with the identification information of the currently viewed program content, and stores them in the AIT storage unit 25.

The communication unit 14 is a communication interface for transmitting and receiving data with the service server 3 through the communication network N.

The second separation unit 15 determines the type of data received by the communication unit 14. In a case in which the received data is determined to be an AIT, the second separation unit 15 outputs the AIT to the communication AIT acquisition unit 16. In a case in which the received data is determined to be an application, the second separation unit 15 outputs the application to the application control unit 19.

In a case in which the received data is data indicating an emergency alert, the second separation unit 15 stores the data in the memory 24.

In a case in which the received data is determined to be a TS packet, the second separation unit 15 extracts various data such as images, sound and an AIT from the TS packet. In a case in which an AIT is extracted, the second separation unit 15 outputs the AIT to the communication AIT acquisition unit 16; and in a case in which data other than an AIT is extracted, the second separation unit 15 outputs the data to the application control unit 19.

The communication AIT acquisition unit 16 acquires the AIT that is output from the second separation unit 15, and stores the AIT into the AIT storage unit 25.

By way of the communication unit 14, the operation receiving unit 17 receives an operation from a user through a remote controller R provided to the receiver 4. The remote controller R includes a Hybridcast (registered trademark) button, and when the Hybridcast button is pressed, a menu generation unit 191 (to be described later) generates a menu screen. The operation receiving unit 17 may receive an operation through the communication unit 14 from an external terminal such as a cellular telephone device.

The viewing state detection unit 18 detects a viewing state of the receiver 4. More specifically, the viewing state detection unit 18 detects, as a viewing state, identification information of the broadcasting station 1 corresponding to a channel selected in the receiver 4. The viewing state detection unit 18 detects identification information of the program content currently viewed in the receiver 4, by referring to an EIT and identifying the identification information of the program content corresponding to the current time, based on the identification information of the program content corresponding to the identification information of the detected broadcasting station 1. The viewing state detection unit 18 detects identification information of an application currently executed by an application execution control unit 192 (to be described later). In a case in which data indicating an emergency alert is stored in the memory 24, the viewing state detection unit 18 determines that the receiver received an emergency alert through broadcasting or communication. In a case in which it is determined that an emergency alert has been received, the viewing state detection unit 18 detects that the viewing state is an emergency state.

The application control unit 19 acquires an application based on an AIT or an execution instruction from the user through the remote controller R, and controls execution of the acquired application. The application control unit 19 outputs audio data of the application content, which is acquired from the service server 3 by executing the application, to the audio control unit 20, and outputs the video data of the application content, which is acquired from the service server 3, to the display control unit 21.

FIG. 4 is a diagram showing an example of an AIT described in an XML format. As described above, an AIT includes a single or plurality of items of individual management information respectively corresponding to a single or plurality of applications, for the purpose of respectively managing the single or plurality of applications.

More specifically, code described within a range from a tag <mhp: Application> to a tag </mhp: Application> shown in FIG. 4 correspond to individual management information regarding a single application. A plurality of items of individual management information can be described in the AIT by newly describing individual management information of other applications after the tag </mhp: Application>.

Among the code corresponding to the individual management information, for example, a code corresponding to a tag <mhp: orgId> represents organization information, which is information of an organization that has created the application. In the present embodiment, it is assumed that the organization information corresponds to identification information of a broadcasting station. A cord corresponding to a tag <mhp: appId> represents identification information of the application (application ID).

A code corresponding to a tag <mhp: serviceBound> represents conjunction information of the application (representing whether the application is an application or a bound application). A code corresponding to a tag <mhp: policyLevel> represents the application's policy level for determining whether an emergency state should be displayed.

A cord corresponding to a tag <mhp: controlCode mhp: type="ARIB-J"> represents life cycle control information of the application; and "AUTOSTART" shown in FIG. 4 is life cycle control information for automatically executing the application by the receiver 4.

Here, the code corresponding to the tag <mhp: orgId>, the code corresponding to the tag <mhp: appId>, the code corresponding to the tag <mhp: serviceBound>, the code corresponding to the tag <mhp: policyLevel>, and the code corresponding to the tag <mhp: controlCode mhp: type="ARIB-J"> are collectively referred to as executable information.

A code corresponding to a tag <mhp: location> represents location information indicating the location of the application. As shown in FIG. 4, the location information describes an address of the service server 3 as the location of the application. An address (path) of the application storage unit 26 of the receiver 4 can also be designated as the location of the application in the location information.

The application control unit 19 controls execution of an application, and controls storage of an application in the application storage unit 26. The application control unit 19 includes: a menu generation unit 191 as menu generating means; and an application execution control unit 192 as application execution controlling means.

When the operation receiving unit 17 receives an operation of pressing the Hybridcast button as a predetermined operation from the user of the receiver 4 through the remote controller R of the receiver 4, the menu generation unit 191 identifies an executable application based on the viewing state detected by the viewing state detection unit 18 and based on the executable information included in the AIT, and generates a menu screen including information of the identified application.

More specifically, when the operation receiving unit 17 receives the operation of pressing the Hybridcast button, the menu generation unit 191 extracts individual management information with the description of "PRESENT" representing "executable" in the life cycle control information.

Subsequently, the menu generation unit 191 extracts individual management information corresponding to an application (bound application) in conjunction with the program content, and individual management information corresponding to an application (unbound application) not in conjunction with the program content.

Namely, the menu generation unit 191 extracts the individual management information with the description of "true" in conjunction information, as the individual management information corresponding to the bound application.

Subsequently, the menu generation unit 191 narrows the extracted individual management information down to individual management information describing organization information corresponding to the identification information of the broadcasting station detected by the viewing state detection unit 18.

Subsequently, the menu generation unit 191 further narrows the narrowed-down individual management information down to individual management information corresponding to an AIT associated with the identification information of the program content detected by the viewing state detection unit 18.

In this manner, the menu generation unit 191 identifies executable individual management information from the individual management information corresponding to the bound application.

The menu generation unit 191 extracts individual management information with the description of "false" in the conjunction information, as individual management information corresponding to the unbound application.

After extracting the individual management information corresponding to the bound application and the individual management information corresponding to the unbound application, the menu generation unit 191 excludes individual management information including identification information of an application matching the identification information of a running application, from the individual management information.

Subsequently, the menu generation unit 191 determines whether the viewing state detection unit 18 detects an emergency state. In a case in which it is determined that an emergency state has been detected, the menu generation unit 191 narrows the extracted individual management information down to individual management information assigned with a policy level executable in an emergency state.

Subsequently, the menu generation unit 191 identifies information of an application corresponding to the extracted individual management information, as information of an application to be displayed on a menu. It is assumed herein that the information of the application is a name or icon of the application, and is included in the individual management information, or can be acquired based on the individual management information.

The menu generation unit 191 generates a menu screen displaying the information of the identified application, and outputs the generated menu screen to the display control unit 21. Subsequently, the display control unit 21 generates a composite screen combining the menu screen with an image output from the first separation unit 12 (an image of the program content), and displays the composite screen on the display 23.

After the display control unit 21 has combined the menu screen with the program content and displayed the combined menu screen on the display 23, when the operation receiving unit 17 receives an operation of selecting an application, the application execution control unit 192 identifies individual management information corresponding to the selected application by referring to an AIT stored in the AIT storage unit 25. The application execution control unit 192 acquires an application from the service server 3 or the application storage unit 26 based on location information included in the identified individual management information, and executes the acquired application.

The application causes the application control unit 19 to acquire video data and audio data of the application content from the service server 3. The application control unit 19 outputs the audio data of the application content acquired by the application to the audio control unit 20, and outputs the video data of the application content acquired by the application to the display control unit 21. Here, in a case in which the application is an application that provides application content in conjunction with the program content, the video data and the audio data of the application content are displayed on the display 23 in conjunction with the video data and the audio data of the program content.

The application execution control unit 192 monitors the AIT storage unit 25, and in a case in which an AIT is newly stored, the application execution control unit 192 refers to life cycle control information described in the AIT. The application execution control unit 192 identifies an application to be automatically executed, based on the life cycle control information of the individual management information included in the AIT stored in the AIT storage unit 25. More specifically, the application execution control unit 192 identifies an application corresponding to the individual management information, in which "AUTOSTART" representing "automatic execution" is described in the life cycle control information, as an application to be automatically executed.

Based on the location information as an acquisition destination of the application described in the individual management information corresponding to the identified application, the application execution control unit 192 acquires an application from the service server 3 through the communication unit 14 and the second separation unit 15, and executes the acquired application. In this case, the application is automatically executed without receiving explicit operating instructions from the user of the receiver 4.

The application execution control unit 192 monitors the AIT storage unit 25, and in a case in which an AIT describing the individual management information corresponding to the running application is newly stored into the AIT storage unit 25, the application execution control unit 192 controls the running application based on the life cycle control information included in the individual management information. For example, in a case in which "DESTROY" representing "terminate" is described in the life cycle control information of the individual management information corresponding to the running application, the execution of the application is terminated.

When the first separation unit 12 outputs audio data, the audio control unit 20 outputs the audio data to the speaker 22 in synchronization with the video data whose display is controlled by the display control unit 21. In a case in which the audio data that is output from the application control unit 19 can be synchronized with the video data whose display is controlled by the display control unit 21, the audio control unit 20 outputs the audio data to the speaker 22 in synchronization with the video data.

When the first separation unit 12 outputs the video data, the display control unit 21 displays the video data on the display 23 in synchronization with the audio data whose output is controlled by the audio control unit 20. When the application control unit 19 outputs the video data, the display control unit 21 combines the video data with another video data (video data of the program content) that is output from the first separation unit 12, and displays the composite video data on the display 23.

When the menu generation unit 191 outputs a menu screen, the display control unit 21 combines the menu screen with the video data that is output from the first separation unit 12, and displays the composite video data on the display 23.

The memory 24 stores meta-information of program content such as an EIT, data indicating an emergency alert, and a variety of other information.

The AIT storage unit 25 stores an AIT acquired by the broadcast AIT acquisition unit 13 and the communication AIT acquisition unit 16. The AIT storage unit 25 stores an AIT corresponding to an application stored in the application storage unit 26. In a case in which the AIT corresponds to an application in conjunction with the program content, the AIT storage unit 25 stores identification information of the currently broadcast program content in association with the AIT.

The application storage unit 26 stores an application that is preinstalled in the receiver 4 as well as an application that is registered by the user of the receiver 4.

Next, descriptions are provided for a display example in a case in which a menu screen is displayed on the display 23 of the receiver 4.

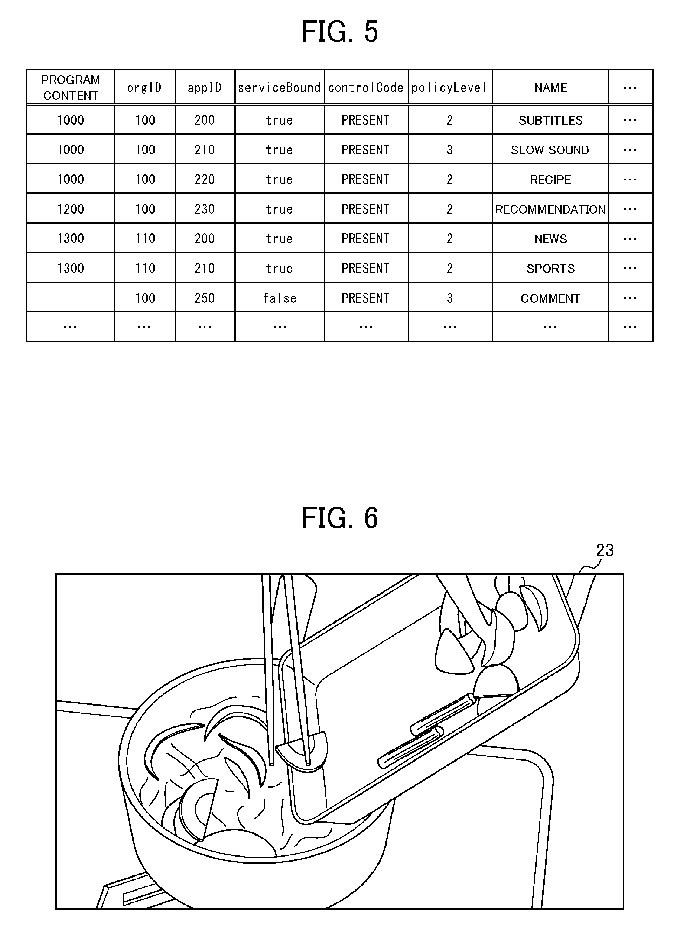

It is assumed herein that the individual management information including the information shown in FIG. 5 is stored in the AIT storage unit 25. It is assumed herein that the viewing state detection unit 18 detects that identification information of the currently viewed broadcasting station 1 is "100", and that identification information of the currently viewed program content is "1000". It is also assumed that no application is running in the receiver 4, and that an image shown in FIG. 6 is displayed on the display 23.

In this case, when the operation receiving unit 17 receives an operation in which the Hybridcast button is pressed by the user of the receiver 4 through the remote controller R of the receiver 4, the menu generation unit 191 extracts individual management information with a description of "PRESENT" representing "executable" in life cycle control information. In this case, all individual management information shown in FIG. 5 is extracted.

Subsequently, the menu generation unit 191 extracts individual management information with a description of "true" in the conjunction information, as individual management information corresponding to the bound application. Here, the menu generation unit 191 extracts individual management information corresponding to applications other than a comment application shown in FIG. 5.

Subsequently, the menu generation unit 191 narrows the extracted individual management information down to individual management information describing organization information corresponding to the identification information of the broadcasting station 1 detected by the viewing state detection unit 18. Here, the menu generation unit 191 narrows the individual management information down to individual management information corresponding to a subtitle application with a description of "100" in orgID, a slow voice application, a recommendation application, and a recipe application.

Subsequently, from the narrowed-down individual management information, the menu generation unit 191 extracts individual management information corresponding to an AIT associated with the identification information of the program content detected by the viewing state detection unit 18. Here, the menu generation unit 191 narrows the individual management information down to individual management information corresponding to the subtitle application, the slow voice application and the recipe application, as individual management information corresponding to the program content "1000".

The menu generation unit 191 extracts individual management information with a description of "false" in the conjunction information, as individual management information corresponding to the unbound application. Here, the menu generation unit 191 extracts individual management information corresponding to the comment application.

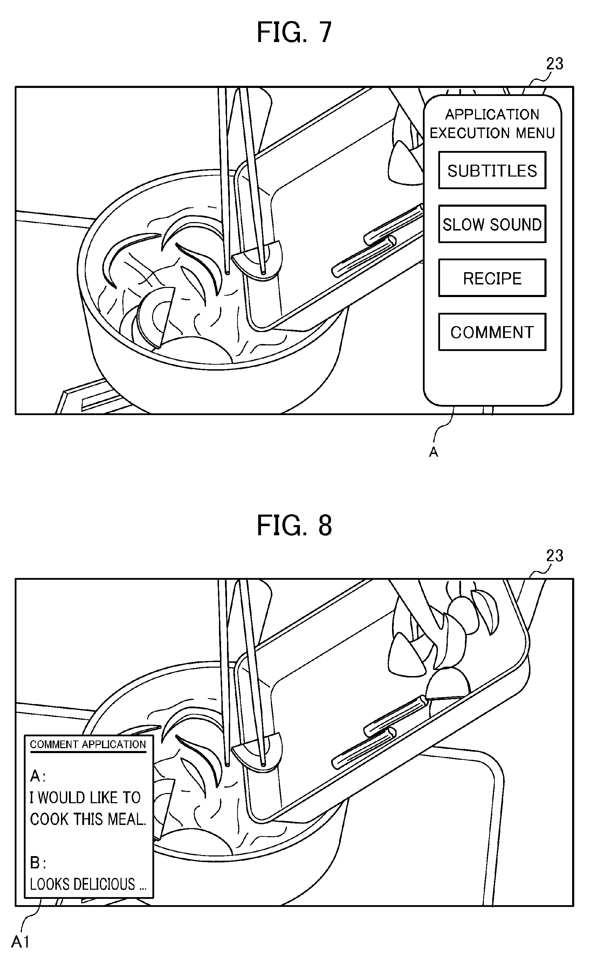

Subsequently, since no applications are running, and no emergency alerts are issued, the menu generation unit 191 generates a menu screen to be output to the display control unit 21, based on the narrowed-down individual management information corresponding to the bound application and based on the individual management information corresponding to the unbound application. As shown in FIG. 7, the display control unit 21 then displays an image on the display 23, in which an image A corresponding to the menu screen is combined with an image of the program content.

Subsequently, in a case in which the image is displayed on the display 23, in which the image A corresponding to the menu screen is combined with the image of the program content as shown in FIG. 7, when the comment application is selected based on the image A corresponding to the menu screen, the application execution control unit 192 acquires the comment application from the service server 3 or from the application storage unit 26 based on location information included in the individual management information of the comment application, and executes the acquired comment application. As shown in FIG. 8, the display control unit 21 then displays an image on the display 23, in which an image A1 corresponding to the comment application is combined with an image of the program content.

Subsequently, in the situation shown in FIG. 8, when an operation of pressing the Hybridcast button by the user of the receiver 4 is received through the remote controller R of the receiver 4, the menu generation unit 191 generates a menu screen as follows.

Namely, the menu generation unit 191 extracts individual management information, in which "PRESENT" representing "executable" is described in the life cycle control information, "true" is described in the conjunction information, and "100" is described in orgID, as individual management information corresponding to the bound application. Here, the menu generation unit 191 extracts individual management information corresponding to the subtitle application, the slow voice application and the recipe application. The menu generation unit 191 extracts individual management information with a description of "false" in the conjunction information, as individual management information corresponding to the unbound application. Here, the menu generation unit 191 extracts individual management information corresponding to the comment application.

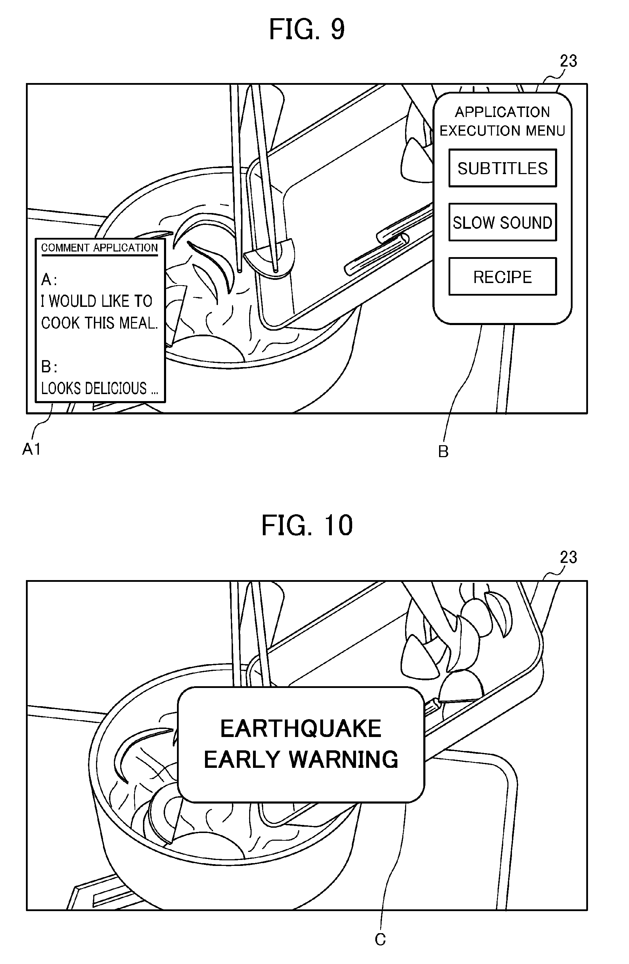

Subsequently, the menu generation unit 191 excludes the already running comment application from the menu. As shown in FIG. 9, the display control unit 21 then displays an image on the display 23, in which the image A1 corresponding to the comment application, an image B corresponding to the menu screen that does not include information corresponding to the comment application, and the image of the program content are combined with one another.

As shown in FIG. 10, in a case in which Earthquake Early Warning is issued as an emergency alert and an image C of Earthquake Early Warning is displayed, when an operation of pressing the Hybridcast button by the user of the receiver 4 is received through the remote controller R of the receiver 4, the menu generation unit 191 generates a menu screen as follows. Namely, the menu generation unit 191 extracts individual management information, in which "PRESENT" representing "executable" is described in the life cycle control information, "true" is described in the conjunction information, and "100" is described in orgID, as individual management information corresponding to the bound application. Here, the menu generation unit 191 extracts individual management information corresponding to the subtitle application, the slow voice application and the recipe application. The menu generation unit 191 extracts individual management information with a description of "false" in the conjunction information, as individual management information corresponding to the unbound application. Here, the menu generation unit 191 extracts individual management information corresponding to the comment application.

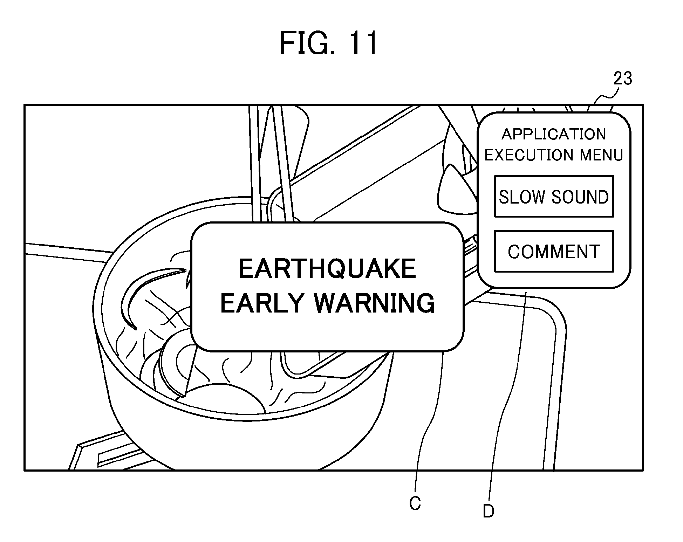

Subsequently, since no applications are running, the menu generation unit 191 does not exclude anything from the extracted individual management information, but determines whether the viewing state detection unit 18 detects an emergency state. Since it is determined that the emergency state has been detected, the menu generation unit 191 narrows the extracted individual management information down to individual management information assigned with a policy level executable in an emergency state. Here, in a case in which the policy level executable in an emergency state is "3", the menu generation unit 191 narrows the extracted individual management information down to individual management information corresponding to the slow voice application and the comment application. As shown in FIG. 11, the display control unit 21 then displays an image on the display 23, in which the image C of Earthquake Early Warning, an image D corresponding to the menu screen, and the image of the program content are combined with one another.

Next, processing flow in the receiver 4 is described.

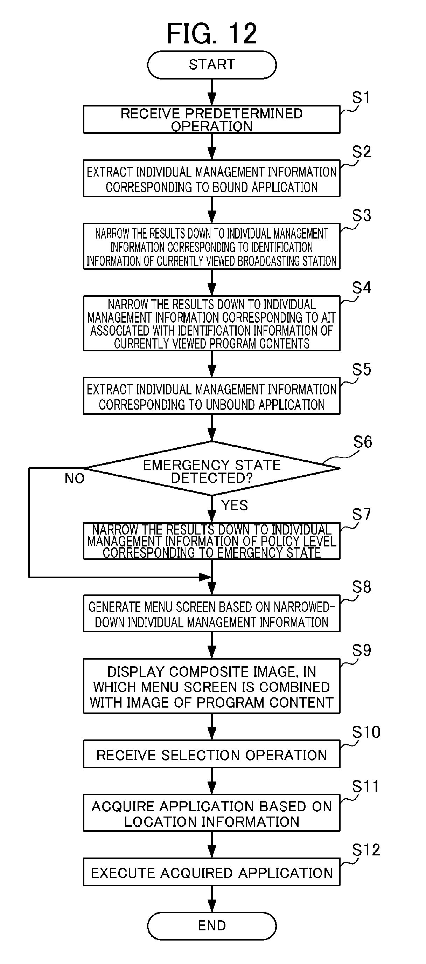

FIG. 12 is a flowchart showing processing flow according to the present embodiment, from receiving a predetermined operation until executing an application via a menu screen.

In Step S1, by way of the operation receiving unit 17, the menu generation unit 191 receives a predetermined operation (an operation of pressing the Hybridcast button) from the user of the receiver 4 through the remote controller R of the receiver 4.

In Step S2, the menu generation unit 191 extracts individual management information corresponding to the bound application from the AIT stored in the AIT storage unit 25. More specifically, the menu generation unit 191 extracts individual management information, in which "PRESENT" representing "executable" is described in the life cycle control information, and "true" is described in the conjunction information.

In Step S3, the menu generation unit 191 narrows the individual management information extracted in Step S2 down to individual management information corresponding to the identification information of the currently viewed broadcasting station 1 detected by the viewing state detection unit 18.

In Step S4, the menu generation unit 191 further narrows the individual management information, which is narrowed down in Step S3, down to individual management information corresponding to an AIT stored in the AIT storage unit 25 in association with the identification information of the currently viewed program content.

In Step S5, the menu generation unit 191 extracts individual management information corresponding to the unbound application from the AIT stored in the AIT storage unit 25. More specifically, the menu generation unit 191 extracts individual management information, in which "PRESENT" representing "executable" is described in the life cycle control information, and "false" is described in the conjunction information.

In Step S6, the menu generation unit 191 determines whether the viewing state detection unit 18 detects an emergency state. In a case in which the determination is YES, the menu generation unit 191 advances the processing to the Step S7; and in a case in which the determination is NO, the menu generation unit 191 advances the processing to the Step S8.

In Step S7, the menu generation unit 191 narrows the individual management information narrowed down in Step S4 and the individual management information extracted in Step S5, down to individual management information of the policy level corresponding to the emergency state.

In Step S8, the menu generation unit 191 generates a menu screen based on the narrowed-down individual management information. More specifically, in a case in which the viewing state detection unit 18 does not detect an emergency state, the menu generation unit 191 generates a menu screen based on the individual management information narrowed down in Step S4 and based on the individual management information extracted in Step S5. In a case in which the viewing state detection unit 18 detects an emergency state, the menu generation unit 191 generates a menu screen based on the individual management information narrowed down in Step S7.

In Step S9, the display control unit 21 generates a composite image by combining the menu screen generated in Step S8 with the image of the program content, and displays the composite image on the display 23.

In Step S10, by way of the operation receiving unit 17, the application execution control unit 192 receives an operation of selecting an application.

In Step S11, the application execution control unit 192 refers to an AIT stored in the AIT storage unit 25, and acquires an application based on location information included in the individual management information corresponding to the application selected in Step S10. An address of the service server 3 or a path of the application storage unit 26 is described as an acquisition destination; and the application is acquired from the service server 3 or the application storage unit 26.

In Step S12, the application execution control unit 192 executes the application acquired in Step S11.

According to the present embodiment described above, the receiver 4 identifies an executable application based on the viewing state of the receiver 4 and the executable information included in the AIT, and generates a menu screen including the information of the identified application. The receiver 4 receives selection of an application through the menu screen. Therefore, the receiver 4 can appropriately present an executable application in accordance with a viewing state.

The receiver 4 generates a menu screen including the information of the application corresponding to the currently viewed broadcasting station 1; therefore, the receiver 4 can present the application corresponding to the currently viewed broadcasting station 1 as an executable application.

The receiver 4 generates a menu screen including the information of the application corresponding to the currently viewed program content; therefore, the receiver 4 can present the application corresponding to the currently viewed program content as an executable application.

The receiver 4 can prevent an already running application from being redundantly executed.

In an emergency state where an emergency alert is issued, the receiver 4 narrows the executable applications down to applications that can be executed even in the emergency state. Therefore, the receiver 4 can suppress execution of applications unnecessary in an emergency state, thereby allow information necessary in an emergency state to be easily browsed by the user of the receiver 4.

The embodiment of the present invention has been described above; however, the present invention is not limited to the above embodiment. The effects described in the embodiment of the present invention are merely cited as most preferred effects achieved by the present invention; the effects according to the present invention are not limited to those described in the embodiment of the present invention.

For example, in the present embodiment, the application control unit 19 causes the AIT storage unit 25 to store an AIT when an application is registered; however, the present invention is not limited thereto. The application control unit 19 may execute an application without registering the application, or may receive registration of a running application after executing the application.

The menu generation unit 191 may set an order of displaying information of an application to be displayed on a menu screen. For example, a genre of the program content is stored in an EIT in advance, and a genre of an application is stored in individual management information of the AIT in advance; and in a case in which the genre of the individual management information corresponding to the application displayed on the menu screen matches the genre of the program content, the menu generation unit 191 may put the application at the top of a display order.

In the present embodiment, a description has been given mainly of the configuration and operation of the receiver; however, the present invention is not limited thereto, and the present invention may include each constituent configured as a method and program for appropriately presenting an executable application in accordance with a viewing state.

Furthermore, the present invention may be implemented by recording a program for implementing the functions of the receiver in a computer-readable recording medium, and by reading and executing the program recorded in the recording medium with a computer system.

The "computer system" as used herein includes an OS and hardware such as peripheral devices. The "computer-readable recording medium" refers to a storage device such as a portable medium including a flexible disk, a magneto-optical disk, ROM, CD-ROM, etc. and a hard disk or the like built in a computer system.

Furthermore, the "computer-readable recording medium" may include a medium for dynamically retaining a program for a short period of time, e.g. for transmitting a program through a network such as the Internet or a communication line such as a telephone line, or may be a medium for retaining a program for a certain period of time, e.g. volatile memory in a computer system serving as a server or a client in such a case. Moreover, the program may be a program for implementing a part of the functions, or may be a program for implementing the functions by combining programs already recorded in a computer system.

## Claims

1. A receiver communicably connected to a server and capable of receiving broadcast waves from a broadcasting station, the receiver comprising:
an operation receiving unit for receiving an operation from a user;
a viewing state detection unit for detecting a viewing state of the receiver;
an application management information storage unit for storing application management information corresponding to a single or each of a plurality of applications capable of acquiring content, the application management information including identification information of an application, executable information indicating an executable viewing state of the application, and location information indicating location of the application;
a receiving unit for receiving a program content signal through broadcasting, the program content signal configured by multiplexing the program content and the application management information;
an application management information acquisition unit for extracting the application management information multiplexed with the program content signal so as to be stored in the application management information storage unit;
a menu generation unit for identifying an executable application when the operation receiving unit receives a predetermined operation, based on the viewing state detected by the viewing state detection unit and based on the executable information included in the application management information, and for generating a menu screen including information of the identified application;
a composite display control unit for display control such that at least one of the content acquired by the application and the menu screen is combined with the program content; and
an application execution control unit for acquiring a selected application from the server and executing the selected application when the operation receiving unit receives an operation of selecting the application after the composite display control unit combines the menu screen with the program content, based on the location information of the application management information corresponding to the selected application.

2. The receiver according to claim 1,
wherein the application management information includes, in the executable information, identification information of a broadcasting station whose channel is selected in the receiver,
wherein the viewing state detection unit detects, as the viewing state, the identification information of the broadcasting station whose channel is selected in the receiver, and
wherein, when the operation receiving unit receives a predetermined operation, the menu generation unit identifies, as an executable application, an application corresponding to the application management information including, in the executable information, the identification information of the broadcasting station whose channel is selected and detected by the viewing state detection unit, and generates a menu screen including information of the identified application.

3. The receiver according to claim 1 or 2,
wherein the viewing state detection unit detects, as the viewing state, identification information of program content currently viewed in the receiver,
wherein the application management information storage unit stores the application management information multiplexed with the program content signal in association with the identification information of the program content currently viewed in the receiver, and
wherein, when the operation receiving unit receives a predetermined operation, in the application management information storage unit, the menu generation unit identifies, as an executable application, an application corresponding to the application management information associated with identification information of the program currently viewed and detected by the viewing state detection unit, and generates a menu screen including information of the identified application.

4. The receiver according to any one of claims 1 to 3,
wherein the viewing state detection unit detects, as the viewing state, identification information of an application currently executed by the application execution control unit, and
wherein, when the operation receiving unit receives a predetermined operation, the menu generation unit identifies, as an executable application, an application corresponding to the application management information including identification information of an application that does not match the identification information of the application detected by the viewing state detection unit, and generates a menu screen including information of the identified application.

5. The receiver according to any one of claims 1 to 4,
wherein the application management information includes, in the executable information, a predetermined flag indicating whether an application should be executed when an emergency alert is issued,
wherein the viewing state detection unit detects that the viewing state is an emergency state, in a case in which the receiver receives the emergency alert through broadcasting or communication, and
wherein, when the operation receiving unit receives a predetermined operation, in a case in which the viewing state detected by the viewing state detection unit is the emergency state, the menu generation unit identifies an executable application based on the predetermined flag included in the executable information, and generates a menu screen including information of the identified application.
